# EUROPÄISCHE PATENTSCHRIFT

(11) **EP 0 547 350 B1**
(45) Veröffentlichungstag und Bekanntmachung des Hinweises auf die Patenterteilung: **04.09.1996**
(21) Anmeldenummer: 92118799.3
(22) Anmeldetag: 03.11.1992
(51) Int. Cl.: F23C 7/00, F23D 3/40

(54) **Mit flüssigem Brennstoff betriebenes Heizgerät**
Heating appliance heated with liquid fuel
Appareil de chauffage chauffé par du combustible liquide

(30) Priorität: 14.12.1991 DE 4141367
(43) Veröffentlichungstag der Anmeldung: 23.06.1993
(73) Patentinhaber: Firma J. Eberspächer, D-73730 Esslingen (DE)
(72) Erfinder: Gaysert, Gerhard, Dipl.-Ing. (FH), W-7300 Esslingen (DE); Götz, Dieter, W-7312 Kirchheim (DE)

(56) Entgegenhaltungen:
- EP-A- 0 220 356
- DE-A- 3 233 319
- US-A- 2 586 411

## Beschreibung

Die Erfindung betrifft eine Anordnung eines mit flüssigem Brennstoff betriebenen Heizgeräts für Fahrzeuge, das unabhängig vom Motor des Fahrzeuges betrieben wird, mit einer Brennkammer, deren Wand Luftdurchtrittsöffnungen aufweist mit nachfolgendem Flammrohr, einem Wärmetauscher und Mitteln zur Brennstoffzufuhr und zur Verbrennungsluftzufuhr und einer Zündeinrichtung sowie Mitteln zur Heizwärmeabfuhr und zur Abgasableitung sowie einer die Brennkammer umgebenden Ringkammer.

Derartige Heizgeräte sind als Zusatz-Heizgeräte für die Aufheizung von Kabinen von Fahrzeugen, Schiffen oder Baumaschinen während stillstehendem Motor des Fahrzeuges bekannt und werden seit vielen Jahren vertrieben. Diese bekannten Heizgeräte sind für eine besimmte Nennleistung ausgelegt, so daß auch unter extremen Bedingungen eine ausreichende Beheizung bei stehendem Fahrzeugmotor bzw. eine Zuheizung bei laufendem und damit Wärme abgebendem Motor möglich ist. Wenn nun nur eine geringe Wärmeabgabe verlangt wird, so wird dies bei den bekannten Heizgeräten entweder durch einen Intervallbetrieb oder durch einen Betrieb mit Teillast, in der Regel mit 1/4 Last als Mindeststufe erreicht.

Es ist bekannt, daß die Brenner derartiger Heizgeräte, unabhängig von dem Modus der Brennstoffzufuhr und der Gemischaufbereitung bei Vollast mit einer Luftzahl von Lambda = 1,2 ... 1,5 betrieben werden. Um den Brenner im Teillastbereich zu betreiben, muß die Brennstoffmenge entsprechend dem geänderten Leistungsverhältnis (Teillast : Vollast) reduziert werden. Um eine einwandfrei saubere Verbrennung zu erhalten, muß auch die Verbrennungsluftmenge angepaßt werden. Dabei haben Untersuchungen gezeigt, daß bei der heute üblichen 1/4 Teillast Luftzahlen von Lambda = 2 die relativ besten Verbrennungswerte ergeben. Dieses hängt jedoch wesentlich von der Ausgestaltung des Brenners ab. So ergeben sich für einige bekannte Brennkammern Luftzahlen im Bereich von Lambda = 3 ... 4. Diese hohen Luftzahlen sind erforderlich, um in dem Teillastbetrieb noch eine ausreichend saubere Verbrennung mit noch tolerablen Emissionswerten zu erhalten. Die erforderliche Reduzierung der Verbrennungsluftmenge erfolgt bei den bekannten Heizgeräten entsprechend dem Teillast- : Vollastverhältnis durch Herabsetzung der Gebläsedrehzahl, die natürlich aus den aufgezeigten Gründen nicht direkt proportional zur Reduzierung der Brennstofförderung erfolgt.

Das Erfordernis im Teillastbereich ein Heizgerät mit hoher Luftzahl zu betreiben, hat jedoch den Nachteil, daß das Überangebot an Verbrennungsluft zu einem Auskühlen der Flamme führt und damit den Ausbrand negativ beeinflußt. Es besteht ferner der Nachteil, daß das Heizgerät nicht mit geringeren Teillasten als etwa 1/4 betrieben werden kann, was jedoch zur Befriedigung der gestiegenen Komfortansprüche nicht mehr ausreicht. Speziell bei Nutzfahrzeugen werden heute Bereiche von 1 : 10 bis 1 : 15 erwünscht. So verlangt z. B. die Motorvorwärmung eines LKW eine Heizleistung von 10 KW, während für die Beheizung der Schlafkabine 1 KW ausreichend ist.

Es ist nach der DE 33 18 054 Al ein gattungsgemäßer Ultraschallzerstäuberbrenner für Luftheizgeräte mit kleinerer Leistung für Fahrzeuge bekannt, bei welchem Verbrennungsluft über einen die Brennkammer umgebenden Ringraum durch Luftzuführungsöffnungen dem Brennraum zugeführt wird. Bei diesen Anordnungen ist es, unabhängig von der Art der Brennstoffaufbereitung (Verdampferbrenner, Druckzerstäuber, Ultraschallzerstäuber etc.), nicht möglich Teillastbereiche kleiner 1 : 4 mit noch vertretbaren Verbrennungseigenschaften zu betreiben.

Der vorliegenden Erfindung liegt daher die Aufgabe zugrunde, ein gattungsgemäßes Heizgerät aufzuzeigen, das unabhängig von der gewählten Brennstoffaufbereitung den Betrieb in einem Teillastbereich von mindestens 1 : 10 bis 1 : 15 ermöglicht bei gutem Ausbrand und geringer Emission.

Für die Lösung dieser Aufgabe wird von der Erkenntnis ausgegangen, daß die Eintrittsgeschwindigkeiten der Verbrennungsluft in die Brennkammer bei der Annahme ähnlicher Luftzahlen wie bei Vollast nicht ausreichen, um eine ausreichende Brennstoff-Verbrennungsluft-Gemischbildung zu erzielen, daß vielmehr die Verbrennungsluft dahingehend beeinflußt werden muß, daß auch bei extremer Teillast noch die für eine gute Gemischbildung erforderliche Eintrittsgeschwindigkeit der Verbrennungsluft in die Brennkammer gegeben ist.

Gelöst wird diese Aufgabe bei einer gattungsgemäßen Heizgeräte-Anordnung durch die im Patentanspruch 1 angegebenen Merkmale.

Vorteilhaft weitergebildet wird der Erfindungsgegenstand durch die Merkmale der Ansprüche 2 bis 6.

Wesen der Erfindung ist, daß die die Brennkammer umgebende Ringkammer durch eine Zwischenwand in einen in Flammenausbreitungsrichtung zuerst angeordneten Abschnitt und in einen dem ersten Abschnitt in Flammenausbreitungsrichtung nachgeordneten zweiten Abschnitt unterteilt ist, wobei jeder der Abschnitte an eine Luftzufuhrleitung angeschlossen ist, und daß die Verbrennungsluftzuführung zu der Luftzufuhrleitung für den zweiten Abschnitt über ein im Teillastbetrieb sperrendes Schaltelement erfolgt.

Mit dieser Anordnung wird erreicht, daß beim Teillastbetrieb nach der erforderlichen Reduktion der Verbrennungsluftmenge durch Zurücknahme der Gebläsedrehzahl die stromab hinteren Luftzuführungsöffnungen abgeschaltet werden, so daß die verbleibende Luftmenge allein den stromab vorderen Luftzufuhröffnungen zugeführt wird und dort unter höherem Druck und damit größerer Geschwindigkeit der Brennkammer zugeführt wird, so daß ein besseres Brennstoff-Verbrennungsluftverhältnis erreicht wird und damit eine bessere Verbrennung. Hierbei hat es sich als besonders zweckmäßig erwiesen, daß der stromab zweite Abschnitt der Ringkammer mit dem Schaltelement über eine Luftzufuhrleitung und der stromab erste Abschnitt der Ringkammer mit der Verbrennungsluftleitung zum Schaltelement verbunden ist. Damit wird eine baulich besonders einfache und kompakte Anordnung mit leichterer Regelbarkeit erreicht. Als Schaltelement wird vorzugsweise ein gegendruckgesteuertes Schaltelement verwendet, das einfach im Aufbau und unter den vorgegebenen Bedingungen eines Heizgerätes besonders zuverlässig arbeitet. Eine weitere Verbesserung kann noch dadurch erzielt werden, daß gemäß einer Weiterführung die Luftdurchtrittsquerschnitte in der Brennkammerwand stromab zunehmen. Das kann entweder durch eine Zunahme der Anzahl der Luftdurchtrittsöffnungen erreicht werden oder durch solche Öffnungen mit zunehmendem Querschnitt bei gleicher Anzahl der Öffnungen.

Bei der erfindungsgemäßen Anordnung kann der stromab erste Ringraum auch die Brennkammer eintrittsseitig zumindest teilweise umgreifen, so daß ein Teil der zugeführten Luft auch stirnseitig in die Brennkammer eintreten kann.

Aus DE-A 32 33 319 ist eine Anordnung eines mit flüssigem Brennstoff betriebenen Fahrzeug-Heizgeräts bekannt. Die Anordnung weist zwar Durchbrüche im Flammrohr auf, durch die jedoch naturgemäß keine Verbrennungsluftzufuhr erfolgen kann. Eine Aufteilung der Luft in Vollast- und Teillastluft ist nicht vorgesehen.

In den Figuren 1 bis 5 ist ein Ausführungsbeispiel vereinfacht und schematisch dargestellt und nachfolgend die Funktionsweise beschrieben. Es zeigt:
Fig. 1 einen Längsschnitt durch eine Brennkammer samt Verbrennungsluftzuführung;
Fig. 2 eine Variante des Umschaltventils;
Fig. 3 eine Variante nach Fig. 2 mit seitlichem Verbrennungsluftabgang;
Fig. 4 eine weitere Variante des Umschaltventils;
Fig. 5 ein p-v-Diagramm mit Kennlinien und Arbeitspunkten.

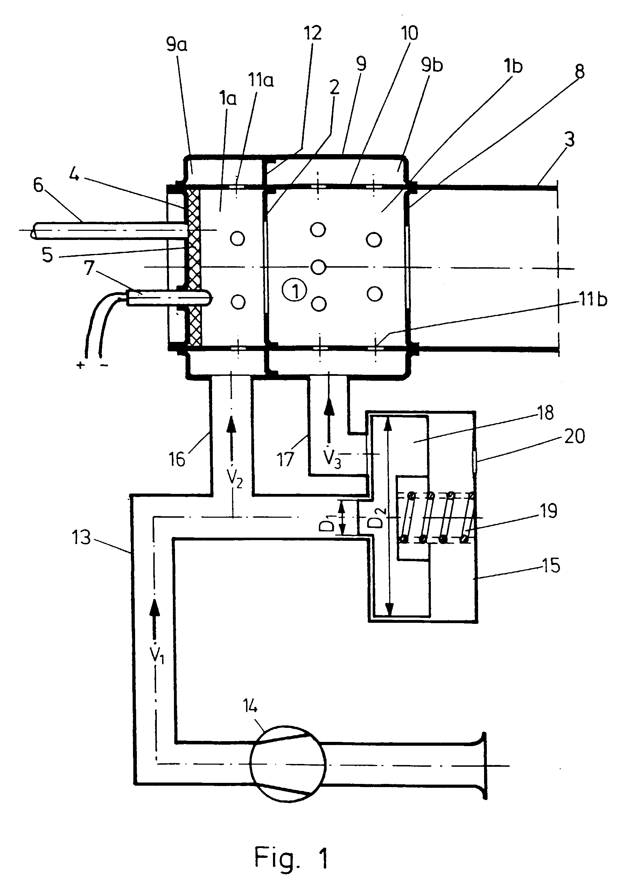

In der Fig. 1 ist eine Brennkammer 1 dargestellt, die durch eine Lochblende 2 in eine stromab vordere Brennkammerzone la und eine stromab hintere Brennkammerzone 16 unterteilt ist. An diese Brennkammer 1 schließt sich ein Flammrohr 3 an. Eintrittsseitig weist die Brennkammer 1 einen Brennkammerboden 4 auf, auf dem eine Platte 5 aus einem saugfähigen und porösen Material, wie z.B. ein Keramikvlies oder Metalldrahtgestrick, aufliegt, über die der über die Brennstoffzuleitung 6 zugeführte Brennstoff zur Verdampfung verteilt wird. Die Zündung des zündfähigen Gemisches in der Brennkammer 1 erfolgt über einen Glühstift 7. Zwischen der Brennkammer 1 und deren Flammrohr 3 ist eine Blende 8 angeordnet, durch welche die Flamme in das Flammrohr 3 eintreten kann. In der Brennkammerwand 10 sind im Bereich der Brennkammerzone la Luftdurchtrittsöffnungen lla und im Bereich der Brennkammerzone 1b Luftdurchtrittsöffnungen llb angeordnet. Dabei kann der Luftdurchtrittsquerschnitt der Luftdurchtrittsöffnungen lla, llb stromab zunehmen, entweder durch Erhöhung der Anzahl der Luftdurchtrittsöffnungen lla, llb oder durch Zunahme der Querschnitte, d.h. Vergrößerung der Luftdurchtrittsöffnungen lla, llb in Richtung stromab. Die Brennkammer 1 ist von einer Ringkammer 9 umgeben, die durch eine Zwischenwand 12 in einen stromab vorderen Abschnitt 9a und einen stromab hinteren Abschnitt 9b unterteilt ist.

Die Verbrennungsluftzufuhr in den Ringraum 9 erfolgt aus der Verbrennungsluftleitung 13 mittels eines Gebläses 14. Diese Verbrennungsluftleitung 13 führt zu einem Schaltelement 15 und weist eine Abzweigung auf, die als Luftzufuhrleitung 16 mit dem Abschnitt 9a der Ringkammer 9 verbunden ist, während der stromab hintere Abschnitt 9b der Ringkammer 9 mit dem Schaltventil 15 über die Luftzufuhrleitung 17 verbunden ist.

Das Schaltelement 15 ist in dem Ausführungsbeispiel als ein pneumatisches Schaltventil ausgebildet und weist ein Gehäuse mit einem Anschluß für die Verbrennungsluftleitung 13 und einem Anschluß für die Luftzufuhrleitung 17 auf. In dem Gehäuse ist ein Kolben 18 angeordnet, der als Stufenkolben ausgebildet ist und mit der Stufe geringeren Durchmessers D₁ den Anschluß für die Verbrennungsluftleitung 13 und mit der Stufe größeren Durchmessers D₂ den Anschluß für die Luftzufuhrleitung 17 verschließt bzw. freigibt. Der Kolben 18 wirkt gegen eine Feder 19; das Gehäuse weist ferner Entlüftungsöffnungen 20 auf.

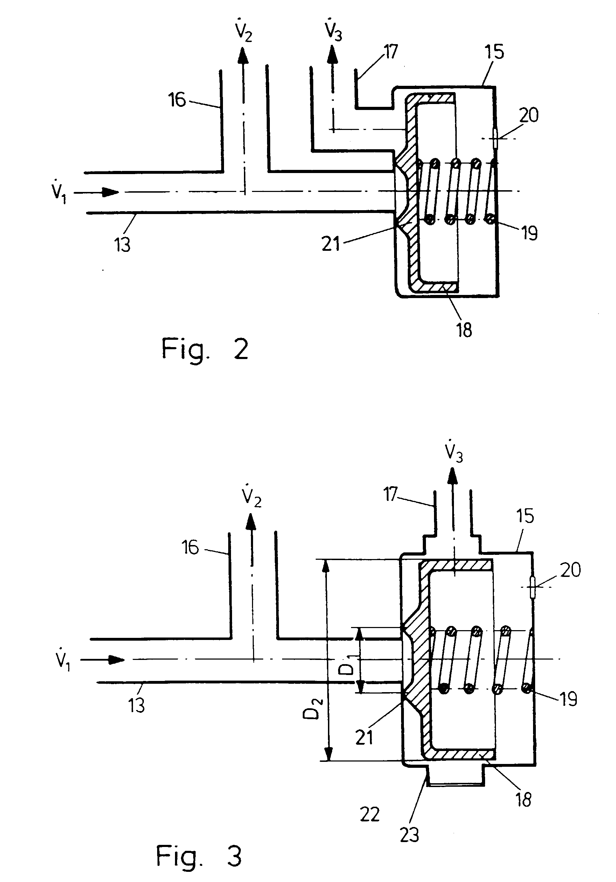

In Fig. 2 ist eine Variante des Schaltelementes 15 dargestellt, bei welcher der Kolben 18 topfförmig ausgebildet und mit einem umlaufenden Abdichtwulst 21 versehen ist. Bei dieser Ausführung werden insbesondere beim Umschalten durch die Stufenkolbenwirkung indifferente Schaltzustände, die zu einem störenden Ventilschnattern führen können, vermieden.

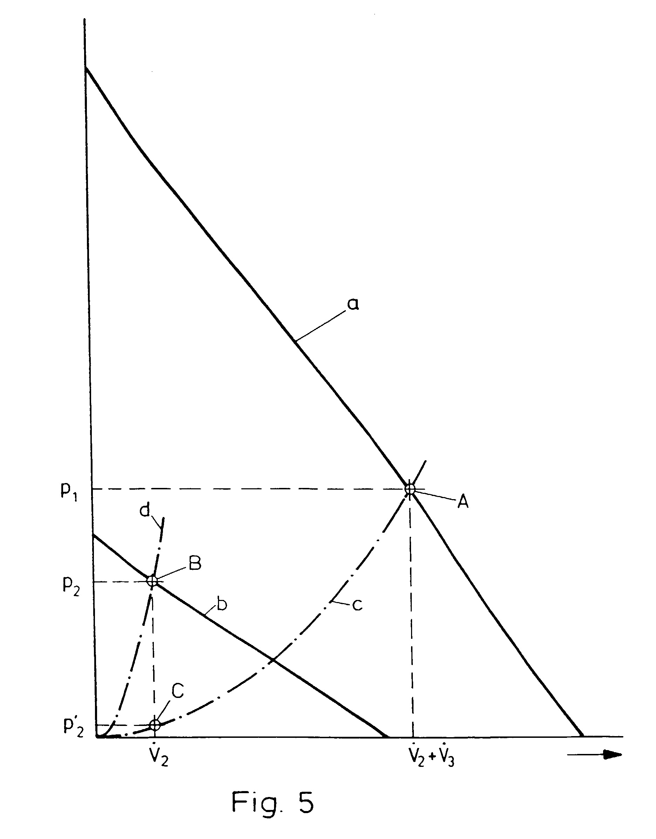

Die Variante des Schaltelementes 15 nach Fig. 3 zeigt einen seitlichen, d.h. gegenüber der Verbrennungsluftleitung 13 um 90° versetzten Anschluß der Luftzufuhrleitung 17. Dabei entstehen zwei zusammenwirkende Steuerkanten 22, 23. Diese beiden Steuerkanten 22, 23 geben erst dann den Zufluß zu der Luftzufuhrleitung 17 frei, wenn der entsprechend der Widerstandskennlinie d nach Fig. 5 wirksame Druck die größere Kolbenfläche mit dem Durchmesser D₂ beaufschlagt hat ohne gleichzeitige Entlastung durch die Luftdurchtrittsöffnungen 11b (in Fig. 1 dargestellt).

In einer nicht dargestellten Ausführungsform kann dieses Schaltelement ähnlich einem Druckregler wirken, wenn der Durchmesser des Abdichtwulstes bis auf den Durchmesser des Kolbens vergrößert wird. Die beiden Steuerkanten bestimmen mit ihrer Form und Lage zusammen mit der Kraft-Weg-Charakteristik der Feder das Schaltverhalten. Mit dieser Ausführungsform können nahezu gleiche Drücke und damit auch gleiche Eintrittsgeschwindigkeiten in die Brennkammer bei Vollast und Teillast vorgegeben werden.

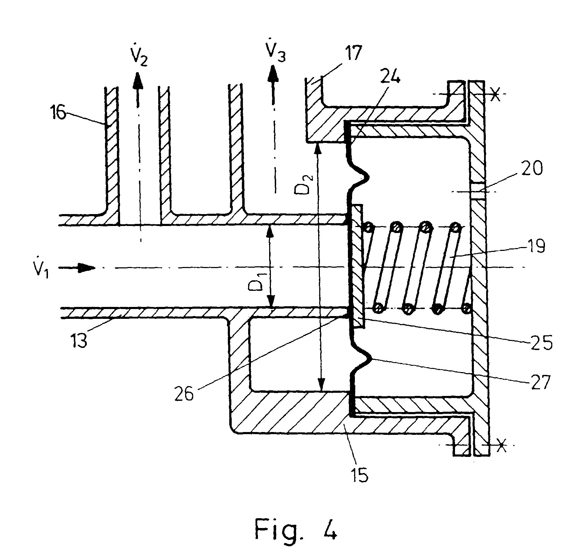

Bei dem bevorzugten Ausführungsbeispiel nach Fig. 4 ist bei dem pneumatischen Schaltelement 15 der Kolben durch eine Membrane 24, z.B. aus Gummi, ersetzt, die von der Feder 19 über einen Federteller 25 auf einen Dichtsitz 26 gepreßt wird. Die Membrane 24 weist dabei zur Verbesserung der Nachgiebigkeit mindestens einen sickenartigen Wulst 27 auf. Die Funktion entspricht dem Ausführungsbeispiel nach Fig. 2.

Anhand der Fig. 1 wird nachfolgend die Wirkungsweise der erfindungsgemäßen Anordung mit dem vorzugsweise automatisch wirkenden Schaltelement 15 beschrieben.

### Funktionsweise der Umschaltung:

1. Start des Heizgerätes mit Vollast:
   Nach Anlauf des Gebläses 14 und Förderung der Vollastluftmenge entsteht an der Kolbenfläche D₁ ein Überdruck, der im wesentlichen von den Luftdurchtrittsöffnungen 11a bestimmt wird. Die Vorspannung der Feder 19 wird überwunden und der Kanal 17 wird freigegeben. Gleichzeitig kommt die größere Kolbenfläche D₂ zur Wirkung und unterstützt die Kolbenhubbewegung, da durch die hinzugekommenen Luftdurchtrittsöffnungen llb der auf den Kolben 18 wirkende Druck abfällt. Der Kanal 17 bleibt so weit offen und alle Luftdurchtrittsöffnungen lla, llb sind wirksam.
2. Umschalten auf Teillast (z.B. auf 1/10 der Nennleistung):
   Die Luftmenge wird über die Gebläsedrehzahl auf z.B. 1/5 und die Brennstoffmenge auf ca. 1/10 des Vollastwertes reduziert. Dadurch fällt gemäß p∼(V̇)² der Druck auf sehr geringe Werte ab, im Beispiel auf ≈ 1/25, der Kolben wird entlastet und der Kanal 17 wird geschlossen. Da jetzt nur noch die Luftdurchtrittsöffnungen 11a wirksam sind, steigt der Druck wieder auf einen Wert, der abhängig von der Relation Querschnitt 11a : Querschnitt llb ist, an. Die Auslegung ist dabei so zu wählen, daß der unter 1. beschriebene Öffnungsdruck nicht erreicht wird. Die Öffnung 20 dient zur Entlüftung an der Kolbenrückseite. Da für den Lufteintritt nun die Öffnungen lla wirksam sind, treten gegenüber einer herkömmlichen Brennkammer ohne Luftumschaltung höhere Eintrittsgeschwindigkeiten mit verbesserter Gemischbildung auf.
3. Umschalten auf Vollast:
   Der Schaltvorgang läuft wie unter 1. beschrieben ab, die Luftdurchtrittsöffnungen 11b werden wieder freigegeben.

In der Fig. 5 ist die Funktion des Schaltelementes 15 mit den Kennlinien und den Arbeitspunkten dargestellt.
Dabei zeigt:
a die Gebläseförderkennlinie bei Vollast;
b die Gebläseförderkennlinie bei Teillast;
c die Widerstandskennlinie bei Vollast;
d die Widerstandskennlinie bei Teillast;
A den Arbeitspunkt bei Vollast;
B -den Arbeitspunkt bei Teillast;
C den Arbeitspunkt bei Teillast ohne Schaltelement.

Bei Vollast (hohe Gebläsedrehzahl) stellt sich im Schnittpunkt der Gebläseförderkennlinie a mit dem vorrangig durch den Widerstand der Gesamtzahl der Luftdurchtrittsöffnungen 11a und 11b (nach Fig. 1) definierten Widerstandskennlinie c der Arbeitspunkt A mit der Luftmenge V̇₂ + V̇₃ und dem Druck p₁ ein. Nach dem Umschalten der Gebläsedrehzahl und der Brennstoffmenge für den Teillastbetrieb stellt sich nach erfolgter automatischer Aktivierung des Schaltelementes 15 der Teillastarbeitspunkt B mit der Luftmenge V̇₂ und dem Druck p₂ ein. Die Lage der Teillast-Widerstandskennlinie d wird dabei im wesentlichen durch die Querschnitte der jetzt noch verbleibenden Luftdurchtrittsöffnungen lla bestimmt, d.h. die Luftdurchtrittsöffnungen llb werden bei Teillast abgeschaltet.

Bei den bekannten Brennkammern ohne Schaltelement 15 und unterteiltem Ringraum 9 stellt sich dagegen nur der wesentlich geringere Druck p'₂ ein und damit der Arbeitspunkt C auf der Gebläseförderkennlinie c. In dem maßstäblich dargestellten Diagramm beträgt die Druckrelation p₂/p'₂ ≈ 16, d.h. gemäß w∼√p wird die in der Brennkammer 1 durch die Luftdurchtrittsöffnungen 11a eintretende Luftgeschwindigkeit um etwa den Faktor 4 angehoben, was zu einer erheblich besseren Durchmischung von Brennstoff und Verbrennungsluft und damit zu einer wesentlich besseren Verbrennung führt.

Die erfindungsgemäße Lösung bezieht sich nicht ausschließlich auf das dargestellte Beispiel mit einem Verdampfungsbrenner, sondern ist auch für andere bekannte Verbrennungssysteme verwendbar, für Zerstäuberbrenner, z.B. Brenner mit Ultraschallzerstäubung oder Druckzerstäubung.

## Patentansprüche

1. Anordnung eines mit flüssigem Brennstoff betriebenen Heizgeräts für Fahrzeuge, das unabhängig vom Motor des Fahrzeuges betrieben wird, mit einer Brennkammer (1), deren Wand Luftdurchtrittsöffnungen (11a, 11b) aufweist mit nachfolgendem Flammrohr (3), einem Wärmetauscher und Mitteln zur Brennstoffzufuhr und zur Verbrennungsluftzufuhr und einer Zündeinrichtung sowie Mitteln zur Heizwärmeabfuhr und zur Abgasableitung sowie einer die Brennkammer (1) umgebenden Ringkammer (9),
dadurch gekennzeichnet,
daß die die Brennkammer (1) umgebende Ringkammer (9) durch eine Zwischenwand (12) in einen in Flammenausbreitungsrichtung zuerst angeordneten Abschnitt (9a) und in einen dem ersten Abschnitt (9a) in Flammenausbreitungsrichtung nachgeordneten zweiten Abschnitt (9b) unterteilt ist, wobei jeder der Abschnitte (9a, 9b) an eine Luftzufuhrleitung (16, 17) angeschlossen ist, und daß die VerVerbrennungsluftzuführung zu der Luftzufuhrleitung (17) für den zweiten Abschnitt (9b) über ein im Teillastbetrieb sperrendes Schaltelement (15) erfolgt.

2. Anordnung nach Anspruch 1, dadurch gekennzeichnet, daß der erste Abschnitt (9a) der Ringkammer (9) mit der Verbrennungsluftleitung (16) zum Schaltelement (15) und der nachgeordnete zweite Abschnitt (9b) der Ringkammer (9) mit dem Schaltelement (15) über eine Luftzufuhrleitung (17) verbunden ist.

3. Anordnung nach Anspruch 1 oder 2, dadurch gekennzeichnet, daß das Schaltelement (15) ein gegendruckgesteuertes Schaltventil ist.

4. Anordnung nach Anspruch 1, 2 oder 3, dadurch gekennzeichnet, daß die Luftdurchtrittsquerschnitte in der Brennkammerwand (10) in Flammenausbreitungsrichtung zunehmen.

5. Anordnung nach einem der Ansprüche 1 bis 4, dadurch gekennzeichnet, daß der erste Abschnitt (9a) die Brennkammer (1) eintrittsseitig, d.h. im Bereich des Brennkammerbodens (4) umgreift.

6. Verfahren zur Steuerung eines Heizgerätes für Fahrzeuge nach einem der Ansprüche 1 bis 5, dadurch gekennzeichnet, daß für eine ausreichende Brennstoff-Verbrennungsluft-Gemischbildung die Verbrennungsluft dahingehend beeinflußt wird, daß auch bei Teillast die für eine gute Gemischbildung erforderliche Eintrittsgeschwindigkeit der Verbrennungsluft in die Brennkammer (1) gegeben ist, wobei bei einem Teillastbetrieb nach der erforderlichen Reduktion der Verbrennungsluftmenge durch Zurücknahme der Gebläsedrehzahl die in Flammenausbreitungrichtung nachgeordnete(n) Luftzuführungsöffnung(en) (llb) der Luftzufuhrleitung (17) durch ein Schaltelement 15) abgeschaltet werden, so daß die verbleibende Luftmenge allein den in Flammenausbreitungsrichtung vorderen Luftzuführungsöffnungen (11a) der Luftzufuhrleitung (16) unter höherem Druck und damit größerer Geschwindigkeit der Brennkammer (1) zugeführt wird.

## Claims

1. An arrangement of a heating device operated using liquid fuel for vehicles, which is operated independently of the engine of the vehicle, having a combustion chamber (1), whereof the wall has air passage openings (11a, 11b), and a flame tube (3) downstream thereof, a heat exchanger and means for the fuel supply and for the combustion air supply and an ignition device as well as means for the dissipation of heating warmth and for exhaust gas discharge as well as an annular chamber (9) surrounding the combustion chamber (1), characterized in that the annular chamber (9) surrounding the combustion chamber (1) is divided by way of a partition wall (12) into a section (9a) arranged first in the direction in which the flames spread, and a second section (9b) arranged downstream of the first section (9a) in the direction in which the flames spread, each of the sections (9a, 9b) being connected to an air supply line (16, 17), and in that the combustion air supply to the air supply line (17) for the second section (9b) takes place by way of a switch element (15) which, in partial-load operating mode, serves as a blocking means.

2. An arrangement according to Claim 1, characterized in that the first section (9a) of the annular chamber (9) is connected to the combustion air line (16) to the switch element (15) and the second section (9b) of the annular chamber (9) arranged downstream is connected to the switch element (15) by way of an air supply line (17).

3. An arrangement according to Claim 1 or 2, characterized in that the switch element (15) is a switch valve controlled by back-pressure.

4. An arrangement according to Claim 1, 2 or 3, characterized in that the air passage cross sections in the combustion chamber wall (10) increase in size in the direction in which the flames spread.

5. An arrangement according to one of Claims 1 to 4, characterized in that the first section (9a) reaches around the combustion chamber (1) on the entry side, i.e. in the region of the combustion chamber floor (4).

6. A process for controlling a heating device for vehicles according to one of Claims 1 to 5, characterized in that, for the formation of an adequate fuel/combustion air mixture, the combustion air is influenced such that, even under partial load, the combustion air enters the combustion chamber (1) at the speed required for proper formation of the mixture, it being the case that, when operating at partial load, after the necessary reduction of the quantity of combustion air by reducing the fan speed, the air supply opening(s) (llb) in the air supply line (17), arranged downstream in the direction in which the flames spread, are cut off by way of a switch element (15) so that the remaining quantity of air is supplied only to the front air supply openings (lla), arranged in the direction in which the flames spread, in the air supply line (16) and, under greater pressure and consequently at greater speed, to the combustion chamber (1).

## Revendications

1. Agencement d'un appareil de chauffage pour véhicules qui fonctionne au moyen d'un combustible liquide, indépendamment du moteur du véhicule, comprenant : une chambre de combustion (1) dont la paroi présente des ouvertures (11a, 11b) de passage de l'air et qui est suivie par un tube-foyer (3), un échangeur de chaleur, des moyens pour l'amenée du combustible et pour l'amenée de l'air de combustion, un dispositif d'allumage et des moyens pour la dissipation de la chaleur de chauffage et pour l'évacuation des gaz brûlés, ainsi qu'une chambre annulaire (9) qui entoure la chambre de combustion (1), caractérisé par le fait que la chambre annulaire (9) qui entoure la chambre de combustion (1) est divisée par une paroi intermédiaire (12) en une partie (9a) qui est disposée en premier dans la direction de propagation de la flamme et en une deuxième partie (9b) qui est disposée en aval de la première partie (9a) dans la direction de propagation de la flamme, chacune des parties (9a, 9b) étant raccordée à un conduit d'amenée d'air (16, 17), et par le fait que l'amenée de l'air de combustion au conduit d'amenée d'air (17) destiné à la deuxième partie (9b) a lieu par l'intermédiaire d'un élément de commande (15) qui l'arrête lors du fonctionnement en charge partielle.

2. Agencement selon la revendication 1, caractérisé par le fait que la première partie (9a) de la chambre annulaire (9) est reliée à l'élément de commande (15) par le conduit d'air de combustion (16), et que la deuxième partie (9b) de la chambre annulaire (9) qui est montée en aval est reliée à l'élément de commande (15) par l'intermédiaire d'un conduit d'amenée d'air (17).

3. Agencement selon la revendication 1 ou 2, caractérisé par le fait que l'élément de commande (15) est une soupape de commande qui est commandée par une contre-pression.

4. Agencement selon la revendication 1, 2 ou 3, caractérisé par le fait que les sections transversales des passages d'air qui sont ménagés dans la paroi (10) de la chambre de combustion augmentent dans la direction de propagation de la flamme.

5. Agencement selon l'une des revendications 1 à 4, caractérisé par le fait que la première partie (9a) entoure la chambre de combustion (1) du côté de l'entrée, c'est-à-dire dans la région du fond (4) de la chambre de combustion.

6. Procédé pour commander un appareil de chauffage pour véhicules selon l'une des revendications 1 à 5, caractérisé par le fait qu'en vue d'une formation suffisante du mélange de combustible et d'air de combustion, on agit sur l'air de combustion de façon à obtenir, même pour une charge partielle, la vitesse d'entrée de l'air de combustion dans la chambre de combustion (1) qui est nécessaire en vue d'une bonne formation du mélange, cependant que, dans le cas d'un fonctionnement à charge partielle, et après la réduction nécessaire de la quantité d'air de combustion par diminution de la vitesse de rotation du ventilateur, la ou les ouvertures d'amenée d'air (11b) du conduit d'amenée d'air (17) qui est disposée ou qui sont disposées en aval dans la direction de propagation de la flamme est fermée ou sont fermées par un élément de commande (15), de sorte que la quantité d'air restante est amenée à la chambre de combustion (1) uniquement par les ouvertures d'amenée d'air (11a) du conduit d'amenée d'air (16) qui est en amont dans la direction de propagation de la flamme, et ce, sous une pression plus élevée, et donc avec une vitesse plus importante.
